# DEMANDE DE BREVET EUROPEEN

(11) **EP 1 970 424 A1**
(43) Date de publication de la demande: **17.09.2008**
(21) Numéro de dépôt: 07104265.9
(22) Date de dépôt: 15.03.2007
(51) Int. Cl.: C10B 47/44, C10B 53/02

(54) **Dispositif et procédé de pyrolyse d'une biomasse**

(71) Demandeur: Pro-Natura International, 75007 Paris (FR)
(72) Inventeur: Hadibi, Rachid, 77100 Montereau (FR)
(74) Mandataire: pronovem

(57) **Abrégé**

La présente invention se rapporte à un dispositif et un procédé de pyrolyse, ou carbonisation, d'une biomasse pour sa transformation en produit énergétique, plus particulièrement en charbon.

## Description

### Objet de l'invention

La présente invention se rapporte à un dispositif et un procédé de pyrolyse, ou carbonisation, d'une biomasse pour sa transformation en produit énergétique, plus particulièrement en charbon.

### Etat de la technique

Face à l'épuisement des énergies fossiles et à l'augmentation de leur prix, les énergies renouvelables font l'objet d'un intérêt grandissant, et plus particulièrement la transformation de la biomasse en produit énergétique. Or, dans cette perspective de transformation en énergie, l'utilisation de la biomasse est généralement synonyme d'utilisation du bois. Cependant, dans certains pays le bois devient de plus en rare. Néanmoins, certaines formes de biomasse, les résidus agricoles, comme par exemple la paille ou la bagasse de canne à sucre, ou bien encore la biomasse renouvelable, telles que l'herbe des savanes, des branches ou des feuilles, sont actuellement peu ou pas valorisées et sont bien souvent utilisées d'une manière peu efficace car simplement brulées.

Cette biomasse présente l'avantage d'être renouvelable, rapidement disponible, abondante, et économique. De plus, sa transformation en produit énergétique, en charbon par exemple, permet aux pays en voie de développement de s'affranchir des contraintes de rareté, d'éloignement, et de coût des combustibles.

Différentes technique de conversion de la biomasse en combustible existent, les trois principales étant la combustion, la gazéification, et enfin la pyrolyse. La combustion de la biomasse correspond à son oxydation complète en présence d'air. Cette réaction fournit de la chaleur, qui peut elle-même être convertie en électricité. La gazéification, quant à elle, est une dégradation incomplète de la biomasse sous l'action de divers agents oxydants tels que l'air. Cette réaction est conduite de manière à privilégier la formation de gaz utilisables dans des moteurs ou des turbines, alors que les résidus solides ne sont pas valorisés. La pyrolyse, pour sa part, correspond à la décomposition thero-chimique de la biomasse sous l'action de la chaleur en l'absence d'agents oxydants, en particulier en absence d'air.

La pyrolyse de la biomasse conduit à la production de trois phases dont l'importance relative varie suivant les conditions opératoires. Tout d'abord, une fraction gazeuse non condensable à fort pouvoir calorifique, ensuite une fraction liquide séparée en deux phases, une phase aqueuse communément appelée pyroligneuse, et une phase lourde, les goudrons, et enfin un résidu solide riche en carbone, le charbon.

Suivant les conditions opératoires et les conditions de transfert thermique, on distingue deux grands types de pyrolyse :
- la pyrolyse lente souvent associée également à de basses températures (<500°C), qui favorise la fraction solide et liquide,
- la pyrolyse rapide favorisant la production de liquides à basse température (<600°C), ou de gaz à haute température (>1000°C). La pyrolyse est également appelée carbonisation lorsque le but est la production de charbon.

La carbonisation présente l'avantage d'être un procédé qui peut fonctionner en continu, sans apport extérieur d'énergie, les gaz produits par la réaction de carbonisation étant utilisés pour alimenter en chaleur le processus. De plus, ce procédé présente l'avantage d'avoir un bilan environnemental neutre du fait qu'il n'y ait aucun rejet de méthane ou de gaz pyroligneux, et du fait que les gaz de pyrolyse toxiques sont brûlés et utilisés comme source d'énergie.

Les techniques et les dispositifs de conversion de la biomasse en charbon sont bien connus de l'état de la technique. On distingue trois techniques de carbonisation :
1- la carbonisation par combustion partielle
2- la carbonisation par contact avec des gaz chauds
3- la carbonisation par chauffage externe

Dans la carbonisation par combustion partielle, l'énergie nécessaire à la carbonisation est fournie par la combustion d'une partie de la charge qui est disposée à l'intérieur d'une enceinte étanche. Cette technique présente de nombreux inconvénients, notamment du fait que les gaz de carbonisation ne sont généralement pas récupérés, ce qui représente une perte de plus de 50 % de l'énergie initiale. De plus, cette technique présente un mauvais rendement de production de charbon de bois et ne permet pas la carbonisation des pailles, des roseaux, des tiges de coton, ainsi que la biomasse de faible granulométrie comme les balles de riz, les parches de café et la sciure de bois.

Dans la carbonisation par contact avec des gaz chauds, l'énergie est fournie par la mise en contact direct de la charge à carboniser et d'un gaz chaud provenant d'un foyer externe. Cette technique présente un bon rendement de production de charbon, de l'ordre de 30 à 35 %, mais le coût d'une telle installation est élevé.

Dans la carbonisation par chauffage externe, encore appelée carbonisation en vase clos, ou en cornue, la charge à carbonisée est placée dans une cornue et l'énergie, produite par un foyer de chauffage externe, est transmise à la charge par l'intermédiaire d'une surface d'échange, en général par l'intermédiaire des parois de l'enceinte. Le foyer de chauffe externe peut être alimenté par tout combustible, plus particulièrement par les gaz de pyrolyse. Une telle technique permet de pouvoir carboniser des matières végétales de faible granulométrie et d'avoir un rendement de production de charbon de l'ordre de 35 %.

Des dispositifs de carbonisation par chauffage externe, réutilisant les gaz issus de la carbonisation pour apporter chaleur nécessaire au processus de carbonisation, sont bien connus de l'état de la technique. Certains de ces fours ne comportent pas de dispositif de transport de la biomasse, ou bien, quand un tel dispositif est présent, il bien souvent inadapté et sujet à de fréquents bourrages.

Le document US5725738 décrit un dispositif de production de charbon à partir de biomasse faisant intervenir un procédé de pyrolyse dans lequel la chambre de carbonisation comprend un système complexe de charriots, chargés de biomasse, qui se déplacent sur des rails le long de la chambre de carbonisation. Un tel dispositif est non seulement très onéreux à produire et à entretenir, mais également difficile à mettre en oeuvre et potentiellement sujet à de lourdes pannes mécaniques.

Le document DE3407236 décrit un dispositif de pyrolyse de déchets dans lequel la chambre de carbonisation est une chambre tournante qui comprend une vis sans fin, alors que le document US2003/0138365 décrit quant à lui un dispositif de pyrolyse de biomasse dans lequel la chambre de carbonisation est fixe et comprend un rotor muni de pales. Néanmoins, les dispositifs de transport assurant l'écoulement de biomasse dans la chambre de carbonisation décrit dans ces documents sont sujets à de fréquents bourrages, ce qui contraint le dispositif de pyrolyse à de fréquents arrêts pour maintenance, et de ce fait, ces fours ne fonctionnent pas réellement en continu.

De plus, de telles chambres de carbonisation présentent également un autre inconvénient majeur. Généralement, le gaz, produit par la carbonisation de la biomasse, est recyclé et brulé dans un brûleur extérieur afin de produire de la chaleur. Cette chaleur est ensuite réinjectée dans le dispositif de manière à chauffer la chambre de carbonisation. Or dans les dispositifs et procédés décrits dans l'état de la technique, le transfert de chaleur n'est pas optimal ; la chaleur dans la chambre de carbonisation n'est pas homogène et n'est pas constante, ce qui se répercute sur la qualité de la carbonisation et donc sur la qualité du charbon produit.

### Buts de l'invention

La présente invention vise à fournir un dispositif et un procédé de carbonisation d'une biomasse qui ne présentent pas les inconvénients de l'état de la technique.

La présente invention a pour but de fournir un dispositif et un procédé de carbonisation de biomasse qui soient simples et peu coûteux, en particulier un dispositif et un procédé de carbonisation d'une biomasse qui présentent un rendement de production de charbon optimisé.

Un autre but de la présente invention vise à fournir un dispositif de transformation d'une biomasse en produit énergétique (pyrolyse) comprenant le dispositif de carbonisation d'une biomasse selon l'invention.

### Résumé de l'invention

La présente invention est relative à un dispositif de carbonisation d'une biomasse comprenant un bâti ayant une paroi supérieure 1a et une paroi inférieure 1b englobant au moins une cornue, ladite cornue comprenant un moyen de transport de la biomasse dans ladite cornue, des moyens de recyclage de gaz de pyrolyse de ladite biomasse et des moyens de circulation des gaz de combustion provenant de la combustion desdits gaz de pyrolyse, dans lequel le moyen de transport comprend au moins deux vis de transport, de préférence des vis sans fin montées en parallèle dans ladite cornue et entraînées de préférence par un moto-réducteur.

Dans le dispositif de l'invention, le bâti 1 présente un volume 4 formé par les parois 1a, 1b du bâti et les parois de la cornue pour le déplacement des gaz de combustion et dans lequel ledit volume comprend des chicanes comportant des obstacles 8 fixés alternativement sur la paroi supérieure 1a du bâti et les parois de la cornue 2, sur la paroi inférieure 1b du bâti et sur les parois de la cornue 2. De préférence, ces chicanes sont réalisées (constituées d'acier réfractaire).

Selon une forme d'exécution préférée de l'invention, les parties 2a et 2b de la cornue sont reliées entre elles par une conduite amovible 2c.

Par le dispositif de l'invention, le flux de la biomasse dans la cornue 2 et le flux de gaz de combustion dans le volume 4 se font à contr... partie (2a) de la cornue 2. Pour assurer une efficacité et un rendement adéquat, le bâti et la paroi interne du bâti sont réalisés en brique réfractaire isolante.

Dans le dispositif de l'invention, le moyen de recyclage des gaz de pyrolyse comprend un élément 5 de collecte desdits gaz au niveau de la cornue 2c et le moyen de circulation des gaz de combustion comprend une entrée 6 dans la paroi inférieure 1b du bâti 1 et une sortie 7 dans la paroi supérieure 1a du bâti 1.

La présente invention concerne aussi un dispositif de transformation d'une biomasse en un produit énergétique comprenant le dispositif de carbonisation de biomasse selon l'invention, mais également des moyens d'alimentation de ladite cornue en biomasse, c'est-à-dire des moyens permettant une alimentation en continu de la biomasse, des moyens de combustion 11, des gaz de pyrolyse et des moyens d'évacuation 13, 14, 15 desdits gaz de combustion. Par moyen d'alimentation en biomasse de la cornue, on entend tout moyen susceptible d'alimenter en continu ladite cornue, de préférence une trémie 18 montée en amont d'une conduite d'alimentation 16, ladite conduite 16 comprenant au moins une vis sans fin et étant éventuellement connectée à un broyeur 17.

Dans le dispositif de transformation d'une biomasse de l'invention, les moyens de combustion de gaz de pyrolyse comprennent un brûleur et les moyens d'évacuation des gaz de combustion comprennent une cheminée qui comprend éventuellement un récupérateur de chaleur.

En outre, le dispositif de transformation d'une biomasse de l'invention comprend aussi des moyens de refroidissement du charbon.

Un dernier aspect de la présente invention est relatif à un procédé de carbonisation d'une biomasse dans lequel ladite biomasse est introduite dans la cornue 2 du dispositif de l'invention et est soumise à un traitement thermique dans ladite cornue pour sa transformation en produits énergétiques par carbonisation et dans lequel le produit énergétique est évacué de la cornue.

### Brève description des figures

La figure 1 représente une vue en perspective d'une forme d'exécution particulière du dispositif de carbonisation selon l'invention.

La figure 2 est vue en perspective similaire à la figure 1 d'une deuxième forme d'exécution particulière du dispositif de carbonisation selon l'invention.

La figure 3 représente une vue en coupe verticale du dispositif de carbonisation selon l'invention.

La figure 4 représente une vue en coupe d'une cornue de carbonisation.

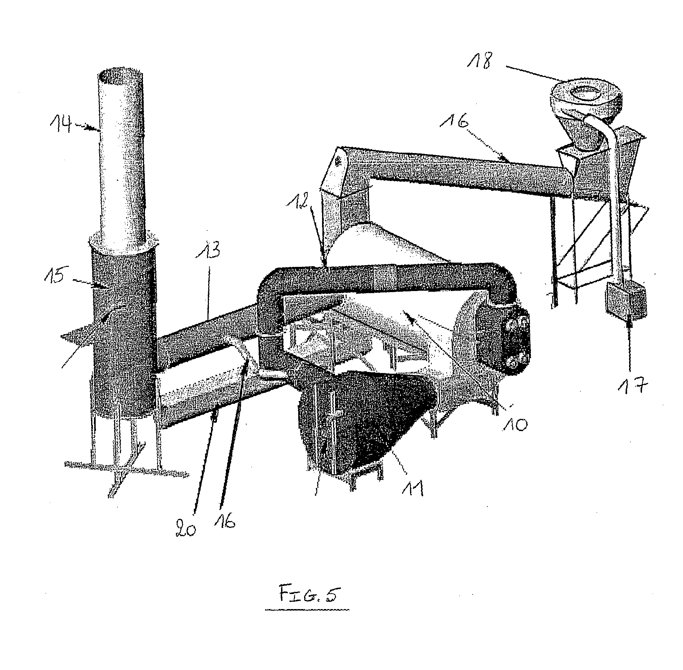

La figure 5 représente schématiquement un dispositif de transformation d'une biomasse en produit énergétique comprenant le dispositif de carbonisation selon l'invention.

### Description détaillée de l'invention

La transformation de la biomasse en charbon par le procédé de carbonisation de l'invention présente l'avantage de pouvoir transformer directement sur le lieu de production agricole ou naturel, des résidus agricoles ou de la biomasse renouvelable (dont la manutention et le transport sur longue distance sont difficiles et coûteux) en un produit solide énergétiquement concentrés. L'utilisation ultérieure de ces produits est ainsi grandement facilitée. De plus, comme les gaz de carbonisation servent à alimenter en chaleur le processus de carbonisation lui-même, le procédé peut ainsi fonctionner en continu, de façon pratiquement autonome en terme d'énergie.

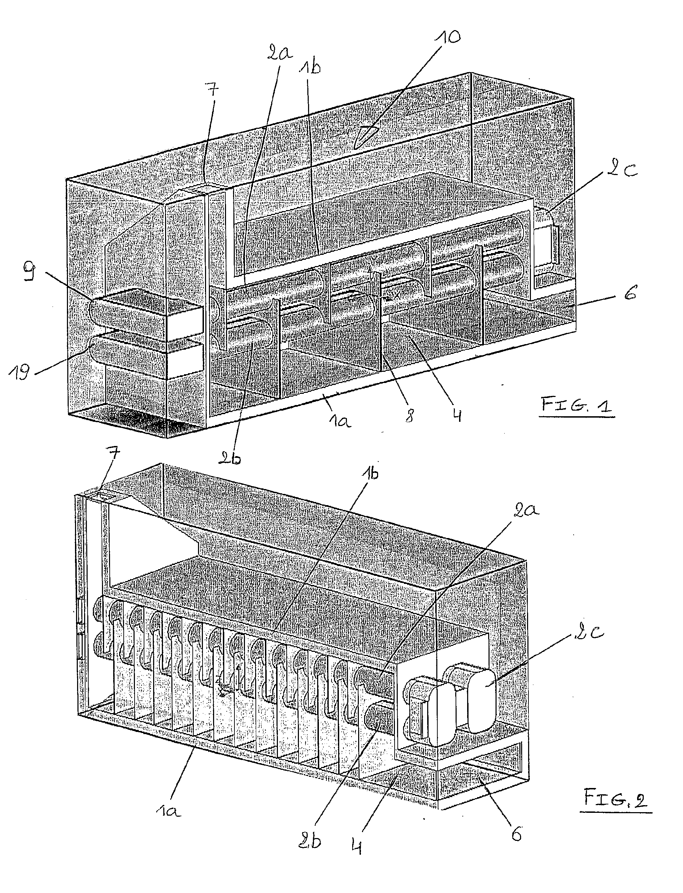

Tel que représenté dans les figures 1 à 3, le dispositif de l'invention 10 est constitué d'un bâti 1 dans lequel l'étape de carbonisation d'une biomasse s'effectue.

Ledit dispositif comprend, englobée dans ledit bâti 1, une cornue 2 qui comprend également des moyens de transport 3 de ladite biomasse, des moyens de recyclage des gaz de carbonisation produits par la carbonisation de cette biomasse et un ou plusieurs moyens de circulation des gaz de combustion produits par un brûleur extérieur alimenté par ledit gaz de carbonisation provenant de la carbonisation de la biomasse.

Tel que représenté dans les figures 1 à 3, la cornue 2 est constituée de deux étages (2a et 2b) et comportant au moins deux ouvertures, à savoir : une ouverture 9, permettant une introduction de la biomasse et une ouverture 19, permettant l'extraction des produits solides énergétiquement concentrés après carbonisation.

Le moyen de transport 3 de la biomasse dans la cornue est disposé dans au moins un des deux étages 2a et 2b de la cornue 2.

De préférence, la cornue 2 est une structure cylindrique dont les éléments principaux (étages 2a et 2b) sont englobés dans le bâti 1.

Tel que représenté dans les figures 1 à 3, une portion de cette cornue 2 peut sortir de la structure du bâti 1, de manière à avoir un accès libre aux deux extrémités de la cornue (ouvertures 9 et 19) mais également la partie 2c de la cornue 2 reliant les étages 2a et 2b.

Cette partie jointive 2c peut éventuellement comporter une ouverture permettant un entretien adéquat du dispositif de l'invention.

Selon une forme avantageuse de l'invention, le déplacement de la biomasse dans la cornue 2 est réalisé au moyen d'au moins deux vis de transport 3, de préférence des vis sans fin, disposées sur une partie 2a ou de préférence sur toute la longueur (2a, 2b, 2c) de la cornue 2.

Selon une forme d'exécution préférée de l'invention, ces deux vis 3 sont incorporées dans la partie 2a supérieure de la cornue, de manière à faciliter le déplacement de la biomasse dans cette partie de la cornue.

Lesdites vis sans fin 3 possèdent un profil adéquat (pas de vis adéquate) pour permettre le transport de ladite biomasse. Leur vitesse de rotation est variable, afin de pouvoir optimiser la carbonisation en fonction du type de biomasse utilisée et afin de permettre un écoulement de façon continue et régulière, sans bourrage, et aussi d'assurer une agitation de la biomasse et permettre ainsi l'introduction en continu de la biomasse et l'évacuation des produits solides énergétiquement concentrés obtenus par cette carbonisation.

L'inventeur a observé de manière inattendue que l'utilisation de deux vis 3 permet une augmentation du rendement de carbonisation. Une augmentation de 20% ou plus du rendement de carbonisation peut être obtenue par l'utilisation de deux vis comparée à l'utilisation du même dispositif avec une seule vis assurant le déplacement de la biomasse. Les vis de transport sont adaptées à la taille des cornues. La partie démontable de la cornue 2c a une hauteur de l'ordre de 15 cm. Cette partie 2c démontable est avantageusement conçue de manière à pouvoir effectuer une fixation adéquate de ces vis 3 et un entretien de ces vis 3.

La mise en rotation des vis 3 de transport est effectuée au moyen d'un moteur (motoréducteur) ayant une puissance d'environ 3 kWh. De préférence, le montage des vis de transport 3 est effectué sur l'une des extrémités de la cornue 2 sur des paliers étanches avec des bagues en fonte résistantes à haute température. L'autre extrémité reposant sur des presse-étoupes.

Selon une forme d'exécution préférée de l'invention, le bâti 1 est un bâti fixe reposant ou s'englobant éventuellement sur une structure solide, tel qu'un support en béton. Ce bâti 1 comporte une paroi supérieure 1a et une paroi inférieure 1b, formant un espace 4, entourant la cornue 2.

Les parois (1a, 1b) de la surface interne du bâti 1 sont réalisées en un matériau isolant, constitué de préférence de briques réfractaires isolantes.

Le bâti 1 de l'invention forme un volume 4 entre les parois 1a et 1b et les parois de la cornue 2.

Ce volume 4 permet une libre circulation des gaz de combustion produits par un brûleur extérieur 11 via une entrée 6 et via une sortie 7, existant dans la paroi du bâti 1.

Les gaz de combustion produits par le brûleur 11 extérieur au bâti 1 proviennent de la combustion des gaz de carbonisation provenant de la carbonisation de la biomasse introduite dans la cornue.

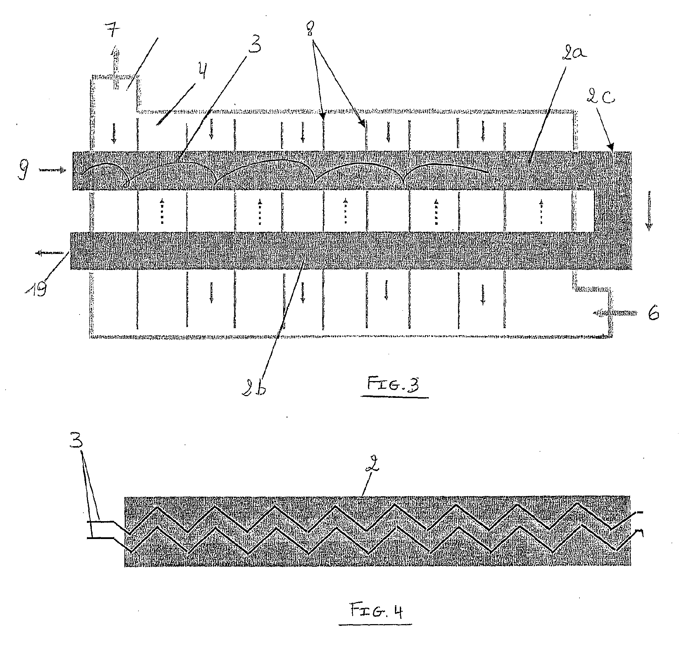

Le volume 4 est défini par les parois (1a, 1b) du bâti 1 et les parois de la cornue 2 permettent une circulation de la chaleur provenant des gaz de combustion et donc un échauffement des dites parois de la cornue 2. De manière à avoir une distribution maximale de cette chaleur provenant des gaz de combustion vers les parois de la cornue 2, différents éléments peuvent être introduits dans le volume 4, de manière à augmenter la durée de parcours des gaz de combustion entre l'entrée 6 et la sortie 7. Avantageusement, des chicanes assurent un déplacement des gaz de combustion dans la partie annulaire entourant la cornue 2. De préférence, l'écoulement des gaz de combustion dans le volume 4 se fait dans le sens inverse de l'écoulement de la biomasse dans la cornue 2 (voir figure 3). Par conséquent, les gaz de combustion les plus chauds sont proches de l'ouverture 6 et permettent un contact optimal avec la partie 2b de la cornue dans laquelle les gaz de carbonisation sont émis.

Les gaz les moins chauds sont évacués par la sortie 7 disposée près de l'ouverture 9 de la cornue 2 permettant l'introduction de la biomasse.

Les chicanes comprennent des obstacles 8 fixés alternativement sur la paroi supérieure la et sur la paroi inférieure 1b et/ou sur la cornue 2, afin de créer dans le volume 4, une circulation optimale des gaz de combustion.

De préférence, ces chicanes 8 sont fixées alternativement sur les différentes parois des éléments de la cornue (2a et 2b) et/ou des parois 1a et 1b du bâti 1.

Ces chicanes 8 sont de préférence réalisés en un matériau réfractaire, telle qu'une tôle réfractaire A 310, ayant une épaisseur variant de préférence de l'ordre de 3 mm.

Dans le dispositif 10 de l'invention, la carbonisation de la biomasse est réalisée à une température variant entre 500 et 600°C, de préférence avantageusement à une température de l'ordre de 550°C. Cette température de carbonisation est maintenue constante dans la majeure partie de la cornue, en particulier dans l'étage 2b de la cornue, grâce à la circulation des gaz de combustion produits par le brûleur externe 11. Le brûleur 11 étant alimenté par les gaz de pyrolyse issus de la carbonisation de la biomasse. L'écoulement homogène des gaz de combustion dans le volume 4 se fait dans le sens inverse de l'écoulement de la biomasse dans la cornue 2.

Le dispositif selon l'invention permet d'améliorer le rendement de carbonisation de façon significative. Selon le type de biomasse utilisée, ce rendement se situe entre 30 % à 50 %, à savoir 30 à 50 grammes de charbon pour 100g d'une biomasse à 15% d'humidité.

La biomasse, pouvant être carbonisée dans le dispositif selon l'invention, se compose de résidus agricoles ou de la biomasse renouvelable. Il peut s'agir de paille de savane, de blé ou de riz, de roseaux, de tiges de coton, de mil ou de cannes de maïs, de balle de riz, de parches de café, de bambous, mais aussi de l'herbe, des feuilles, ou des écorces.

Le dispositif de transformation de la biomasse en produit énergétique comprenant le dispositif de carbonisation selon l'invention 10, comprend en outre des moyens d'alimentation du dispositif en biomasse, des moyens de combustions des gaz de carbonisation, des moyens d'évacuation des gaz de combustion.

L'alimentation en biomasse peut se faire par tout moyen adéquat. De préférence, elle s'effectue par une trémie 18 montée en amont d'une conduite d'alimentation 16 comprenant une vis sans fin entraînée par un motoréducteur et raccordée au dispositif de carbonisation par une conduite de section rectangulaire.

De préférence, les moyens de combustion des gaz de carbonisation comprennent un brûleur 11. Le brûleur (externe) 11 a pour fonction d'alimenter en énergie le dispositif de carbonisation, soit en brûlant du fioul durant le préchauffage du dispositif de carbonisation, soit en brûlant les gaz de pyrolyse. Le brûleur 11 est compris dans une chambre de combustion, de préférence en acier, qui peut comprendre en outre une protection intérieure en béton réfractaire isolant, de type firelite 2500 par exemple. Dans une forme de réalisation préférée, la chambre de combustion a une longueur de 600 mm à 800 mm et un diamètre de 1,2 m. Avantageusement, une chambre de postcombustion, de 600 mm de long et de 400 mm de diamètre est montée tangentiellement sur la chambre de combustion principale et assure le bon mélange de l'air chaud provenant d'un récupérateur de chaleur 15 logé dans la cheminée 14 et des gaz de pyrolyse.

L'évacuation des gaz de pyrolyse de la cornue 2 (via la partie 2c) vers le brûleur 11, se fait par l'intermédiaire d'une conduite 12. Après leur acheminement dans le volume 4, les gaz de combustion quittent le dispositif de carbonisation 10 par la sortie 7 et sont dirigés vers la cheminée 14 grâce à une conduite 13.

De préférence, la cheminée 14 est en acier inox et est isolée de l'intérieur par une couche de nappe en fibre de céramique, de 25 mm d'épaisseur de préférence. Dans une forme particulière de réalisation, la cheminée 14 a une hauteur de 4 m pour un diamètre de 80 cm. De préférence, l'extrémité supérieure de la cheminée 14 a une hauteur de 2 à 4 m pour un diamètre de 40 cm.

De préférence, la cheminée 14 comprend un récupérateur de chaleur 15 qui a pour fonction d'alimenter en air chaud le brûleur 11. Dans une forme de réalisation préférée, le récupérateur de chaleur 15 est monté en forme d'épingle et comprend des tubes en inox de 88 mm de diamètre. L'air, circulant dans la conduite 16 de l'échangeur de chaleur 15 vers le brûleur 11, est de préférence soufflé par un ventilateur centrifuge.

Le dispositif de transformation de la biomasse en produit énergétique peut comprendre en outre des moyens 20 de refroidissement du charbon. En effet, à la sortie des cornues la poudre de charbon peut s'enflammer spontanément. Le charbon est refroidi, de préférence à 60°C, grâce à un échangeur de chaleur adapté. Ce refroidissement permet également d'obtenir une agglomération maîtrisée de la poudre de charbon qui peut ainsi être conditionnée en différents formes de boulets, briquettes ou barres.

## Revendications

1. Un dispositif de carbonisation (10) d'une biomasse comprenant un bâti (1) ayant une paroi supérieure (1a) et une paroi inférieure (1b), englobant au moins une cornue (2), ladite cornue (2) comprenant un moyen de transport (3) de la biomasse dans ladite cornue (2), des moyens de recyclage des gaz de pyrolyse de ladite biomasse et des moyens de circulation des gaz de combustion provenant de la combustion desdits gaz de pyrolyse,
**caractérisé en ce que** ledit moyen de transport (3) comprend au moins deux vis de transport.

2. Le dispositif de carbonisation de biomasse selon la revendication 1 dans lequel lesdites vis de transport (3) sont des vis sans fin, montées en parallèle dans ladite cornue (2).

3. Le dispositif de carbonisation de biomasse selon la revendication 1 ou 2 dans lequel lesdites vis de transport (3) sont entraînées par un motoréducteur.

4. Le dispositif de carbonisation d'une biomasse selon l'une quelconque des revendications précédentes, **caractérisé en ce que** ledit bâti (1) présente un volume (4) formé par les parois (1a, 1b) du bâti (1) et les parois de la cornue (2) pour le déplacement des gaz de combustion et **en ce que** ledit volume (4) comprend des chicanes(8) fixées alternativement sur la paroi supérieure (1a) du bâti (1) et sur les parois de la cornue (2), sur la paroi inférieure (1b) du bâti (1) et sur les parois de la cornue (2).

5. Le dispositif de carbonisation de biomasse selon la revendication 4, dans lequel les chicanes (8) sont réalisées en acier réfractaire.

6. Le dispositif de carbonisation de biomasse selon l'une quelconque des revendications 4 ou 5, dans lequel des parties (2a et2b) de la cornue (2) sont reliées entre elles par une conduite amovible (2c).

7. Le dispositif de carbonisation de biomasse selon l'une quelconque des revendications précédentes 4 à 6, dans lequel le flux de la biomasse dans la cornue (2) et le flux des gaz de combustion dans le volume (4) se font à contre-courant.

8. Le dispositif de carbonisation de biomasse selon l'une quelconque des revendications précédentes dans lequel le bâti (1) ou la paroi interne du bâti (1) est en briques réfractaires isolantes.

9. Le dispositif de carbonisation de biomasse selon l'une quelconque des revendications précédentes dans lequel ledit moyen de recyclage des gaz de pyrolyse comprend un élément (5) de collecte desdits gaz au niveau de la cornue (2c).

10. Le dispositif de carbonisation de biomasse selon l'une quelconque des revendications précédentes dans lequel ledit moyen de circulation des gaz de combustion comprend une entrée (6) dans la paroi inférieure (1b) du bâti (1) et une sortie (7) dans la paroi supérieure (1a) du bâti (1).

11. Un dispositif de transformation d'une biomasse en produit énergétique comprenant le dispositif de carbonisation de biomasse selon l'une quelconque des revendications précédentes 1 à 10, des moyens d'alimentation de la cornue (2) en biomasse, des moyens de combustion (11) des gaz de pyrolyse et des moyens d'évacuation (13, 14, 15) des gaz de combustion.

12. Le dispositif de transformation d'une biomasse selon la revendication 1, dans lequel les moyens d'alimentation en biomasse comprennent une trémie (18) montée en amont d'une conduite d'alimentation (16), ladite conduite (16) comprenant au moins une vis sans fin, éventuellement connectée à un broyeur (17).

13. Le dispositif de transformation d'une biomasse selon les revendications précédentes 11 à 12, dans lequel les moyens de combustion des gaz de pyrolyse comprennent un brûleur (11).

14. Le dispositif de transformation d'une biomasse selon les revendications précédentes 11 à 13, dans lequel les moyens d'évacuation des gaz de combustion comprennent une cheminée (14) qui comprend éventuellement un récupérateur de chaleur (15).

15. Le dispositif de transformation d'une biomasse selon les revendications précédentes 11 à 14 comprenant en outre des moyens (20) de refroidissement du charbon.

16. Un procédé de carbonisation d'une biomasse dans lequel ladite biomasse est introduite dans la cornue (2) du dispositif (10), selon l'une quelconque des revendications précédentes 11 à 15 et est soumise à un traitement thermique dans ladite cornue pour sa transformation en un produit énergétique par carbonisation et dans lequel le produit énergétique est évacué de la cornue (2).
